# EUROPEAN PATENT APPLICATION

(11) **EP 3 032 473 A1**
(43) Date of publication of application: **15.06.2016**
(21) Application number: 15159996.6
(22) Date of filing: 20.03.2015
(51) Int. Cl.: G06Q 10/06

(54) **METHOD AND SYSTEM FOR CLASSIFYING PLANT DISEASE THROUGH CROWDSOURCING USING A MOBILE COMMUNICATION DEVICE**

(30) Priority: 11.12.2014 IN MU39712014
(71) Applicant: Tata Consultancy Services Limited, Maharashtra (IN)
(72) Inventor: JAGYASI, Bhushan Gurmukhdas, 400601 Maharashtra (IN); MOHITE, Jayantrao Diliprao, 400601 Maharashtra (IN)
(74) Representative: Blot, Philippe Robert Emile

(57) **Abstract**

A method and system is provided for classifying plant disease in a geographical region through crowdsourcing using mobile communication device, wherein method comprising generation and distributing of a first set of task pertaining to a plurality of plant disease attributes to a first group of user via a mobile crowd sourcing application; collecting response from the first group of user against distributed first set of task and aggregating the same for generating a subsequent set of task pertaining to the plurality of plant disease attributes for distributing to a subsequent group of user; aggregating collected response of the subsequent set of task; and classifying plant disease and determining severity of the classified plant disease.

## Description

### FIELD OF THE INVENTION

The present application generally relates to information technology application in agriculture. Particularly, the application provides a method and system for classifying plant disease. More particularly, the application provides a method and system for classifying plant disease and identifying severity of the plant disease in a geographical region through crowdsourcing using a mobile communication device

### BACKGROUND OF THE INVENTION

The recent time has witnessed a considerable development of economies which are largely dependent on agriculture. With the advent of technology, and its application in agriculture have not only contributed tremendously in improving upon various means of high yielding but have also provided means for reducing biological infections affecting crop yield. However, disease outbreak is still a major contributor for loss of yield and quality of any harvest. Thereby, management of pest and diseases for the crops under cultivation becomes one of the critical problems faced by farmers. Going further, plant disease identification, determining severity of disease, detecting nutrient deficiency are some of the technical challenges faced by farmers while dealing with disease outbreak, which is mainly due to the lack of accurate and localized information pertaining to diseases and pests that emerge in farms.

Prior art literature illustrates a variety of solutions for accurate plant disease identification, determining severity of disease, detecting nutrient deficiency. However, none of the solutions enable farmers to independently identify various abnormalities related to their crops which could be further utilized to aggregate and infer for accurate plant disease identification and severity based upon it. The current technology also fails to provide necessary information which is specific to current state of the farms. Some of the prior art solution discloses physical verification of plant disease and causing pest by an agriculture expert. However, such solution exhibit practical constraints of fewer experts visiting a large number of farms to analyze the pest and diseases and to provide alerts to other farmers in the same region. Thereby, the problem of early detection of crop diseases and its severity is of paramount importance for the improvement of yield and quality of the harvest. Also, remote classification of plant diseases affecting crops becomes essential to advise on appropriate corrective actions to the farmers.

Despite of ubiquitous use of mobile communication device in bridging the information gap for various applications, the existing solutions generally are not capable of providing a participatory sensing or crowd sourcing approach using such devices, enabling farmers to identify abnormalities related to their crops independently in a particular geographical region, which could be aggregated for plant disease identification and severity thereof.

Thus, in the light of the above mentioned background art, it is evident that, there is a need for a solution that which can classify a plant disease in a geographical region while utilizing participatory sensing based approach and determine severity of classified disease. There is also a need for a solution that utilizes mobile communication device based crowd sourcing, in particular to classify plant disease. A method and system for classifying plant disease through crowdsourcing using a mobile communication device is desired.

### SUMMARY OF THE INVENTION

Before the present methods, systems, and hardware enablement are described, it is to be understood that this invention is not limited to the particular systems, and methodologies described, as there can be multiple possible embodiments of the present invention which are not expressly illustrated in the present disclosure. It is also to be understood that the terminology used in the description is for the purpose of describing the particular versions or embodiments only, and is not intended to limit the scope of the present invention which will be limited only by the appended claims.

The present application provides a method for classifying plant disease in a geographical region through crowdsourcing using a mobile communication device. The method for classifying plant disease comprising actuating generation of a first set of task pertaining to a plurality of plant disease attributes; distributing generated first set of task to a first group of user; collecting response from the first group of user against distributed first set of task; aggregating the collected response for generating a subsequent set of task pertaining to the plurality of plant disease attributes based on the aggregated response of the first set of task for distributing to a subsequent group of user; collecting response from the subsequent group of user against distributed subsequent set of task; and aggregating the collected response of the subsequent set of task; and classifying plant disease and determining severity of the classified plant disease based on the aggregated response of the subsequent set of task.

The present application provides a system (200) for classifying plant disease in a geographical region through crowdsourcing using a mobile communication device. The system (200) for classifying plant disease comprising a mobile crowd sourcing application (202) residing inside and running on a global positioning system (GPS) enabled mobile communication device (204); a server (206), communicatively coupled to the mobile crowd sourcing application (202) residing inside and running on a global positioning system (GPS) enabled mobile communication device (204); a pre-defined task database (208); and a task response database (210), communicatively coupled with the server (206). The server (206) further comprise of a decision tree based task generation module (302); a task distribution module (304); a task response collection module (306); and a plant disease classification module (308).

### BRIEF DESCRIPTION OF THE DRAWINGS

The foregoing summary, as well as the following detailed description of preferred embodiments, are better understood when read in conjunction with the appended drawings. For the purpose of illustrating the invention, there is shown in the drawings exemplary constructions of the invention; however, the invention is not limited to the specific methods and system disclosed. In the drawings:
Figure 1: shows a flow chart illustrating a processor implemented method for classifying plant disease in a geographical region through crowdsourcing using mobile communication device.
Figure 2: shows a bock diagram illustrating system architecture for classifying plant disease in a geographical region through crowdsourcing using mobile communication device.
Figure 3: shows a bock diagram illustrating architecture of a server for classifying plant disease in a geographical region through crowdsourcing using mobile communication device.

### DETAILED DESCRIPTION OF THE INVENTION

Some embodiments of this invention, illustrating all its features, will now be discussed in detail.

The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present invention, the preferred, systems and methods are now described.

The disclosed embodiments are merely exemplary of the invention, which may be embodied in various forms.

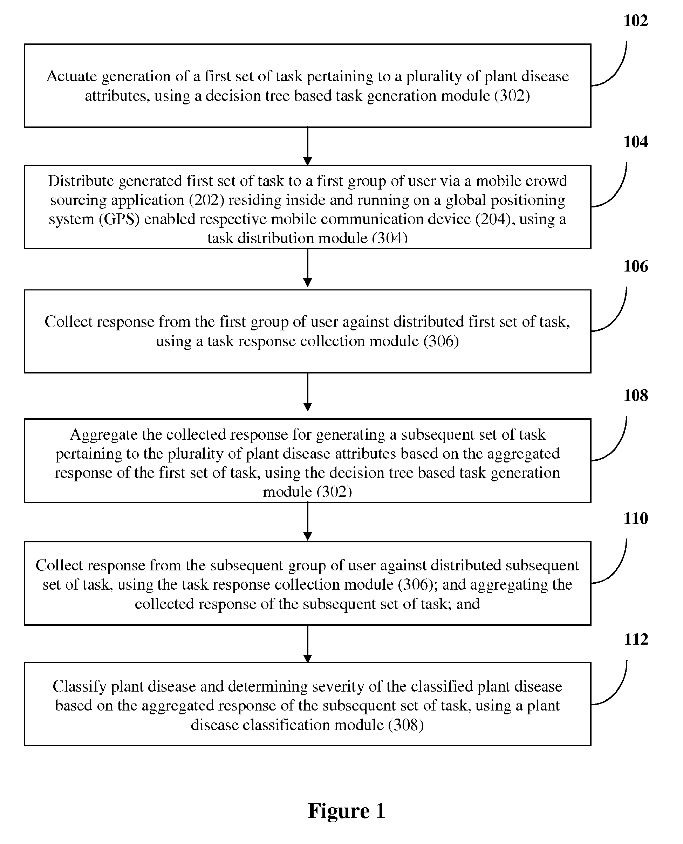

Referring to Figure 1 is a flow chart illustrating a processor implemented method for classifying plant disease in a geographical region through crowdsourcing using mobile communication device.

The process starts at step 102, generation of a first set of task pertaining to a plurality of plant disease attributes is actuated, using a decision tree based task generation module (302). At the step 104, generated first set of task is distributed to a first group of user via a mobile crowd sourcing application (202) residing inside and running on a global positioning system (GPS) enabled mobile communication device (204) respectively, using a task distribution module (304). At the step 106, response is collected from the first group of user against distributed first set of task, using a task response collection module (306). At the step 108, the collected response is aggregated for generating a subsequent set of task pertaining to the plurality of plant disease attributes based on the aggregated response of the first set of task for distributing to a subsequent group of user via the mobile crowd sourcing application (202) residing inside and running on their respective mobile communication devices (204), using the decision tree based task generation module (302). At the step 110, response is collected from the subsequent group of user against distributed subsequent set of task, using the task response collection module (306); and aggregating the collected response of the subsequent set of task. The process ends at the step 112, plant disease is classified and severity of the classified plant disease is determined based on the aggregated response of the subsequent set of task, using a plant disease classification module (308).

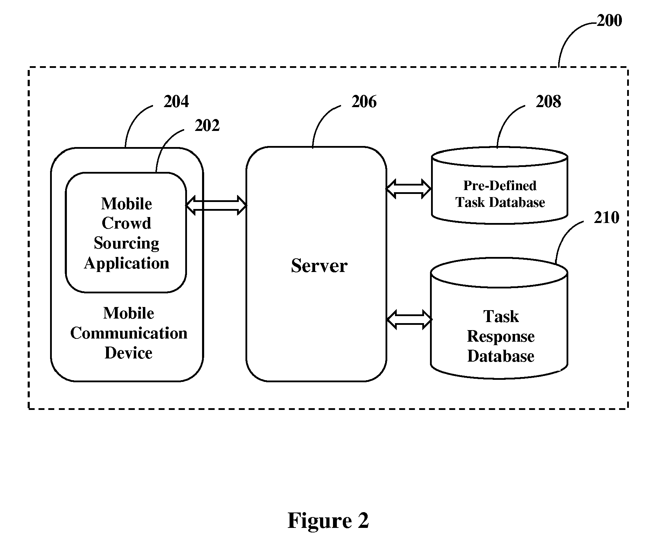

Referring to Figure 2 is a bock diagram illustrating system architecture for classifying plant disease in a geographical region through crowdsourcing using mobile communication device.

In an embodiment of the present invention, a system (200) is provided for classifying plant disease in a geographical region using mobile communication device based crowd sourcing. The system (200) comprising a mobile crowd sourcing application (202) residing inside and running on a global positioning system (GPS) enabled mobile communication device (204); a server (206) comprising a processor and a memory coupled to the processor, communicatively coupled to the mobile crowd sourcing application (202) residing inside and running on a global positioning system (GPS) enabled mobile communication device (204); a task response database (210), communicatively coupled with the server (206) adapted for storing the collected and aggregated task response; and a pre-defined task database (208), adapted for storing a plurality of pre-defined task.

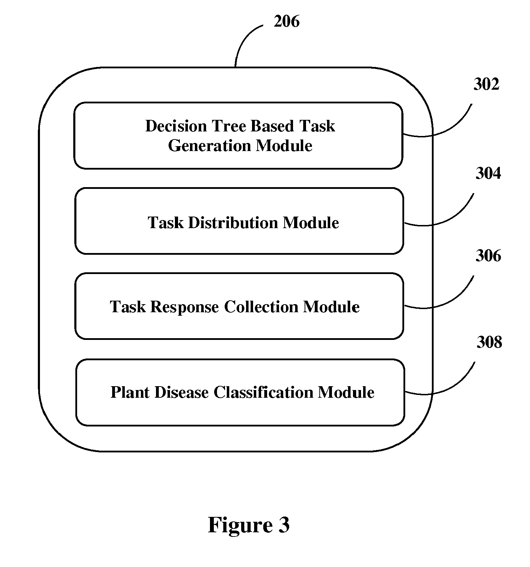

Referring to Figure 3 is a bock diagram illustrating architecture of a server for classifying plant disease in a geographical region through crowdsourcing using mobile communication device.

In another embodiment of the present invention, the server (206) comprising the processor and the memory coupled to the processor, is communicatively coupled to the mobile crowd sourcing application (202) residing inside and running on a global positioning system (GPS) enabled mobile communication device (204). The mobile communication device (204) is selected from a group comprising of but not limited to mobile phone, laptop, tablet, and personal digital assistant. The server (206) further comprise of a decision tree based task generation module (302); a task distribution module (304); a task response collection module (306); and a plant disease classification module (308)

In another embodiment of the present invention, the decision tree based task generation module (302) is adapted for actuating generation of a first set of task pertaining to a plurality of plant disease attributes and generating a subsequent set of task pertaining to the plurality of plant disease attributes based on the aggregated response of the first set of task. The generation of the first set of task pertaining to the plurality of plant disease attributes is actuated by a plurality of conditions selected from a group comprising of crop type, weather conditions, soil properties, spatio-temporal variation of major and micro nutrients in the geographical region, throughout the growing season. The plurality of plant disease attributes are selected from a group comprising of symptoms of plant disease, nutrient deficiency, number of plants affected, number of plants damaged, severity of affected and damaged plants, mycellium, leaf spots and other visually perceivable disease specific plant symptoms.

In an alternative embodiment of the present invention, the first set of task and subsequent set of task pertaining to the plurality of plant disease attributes are selected from the pre-defined task database (208) comprising plurality of pre-defined task using the decision tree based task generation module (302). The pre-defined task database (208) is created while utilizing domain knowledge about disease and causing pest of the variety of crops.

In another embodiment of the present invention, the task distribution module (304) is adapted for distributing generated first set of task to a first group of user and the subsequent set of task to a subsequent group of user via the mobile crowd sourcing application (202) residing inside and running on their respective mobile communication devices (204). The first group of users and subsequent group of user are farmers. The first group of users and subsequent group of user are co-located in the geographical region and the subsequent group of user comprises one or more user out of the first set of users. The first set of task and subsequent set of task distributed via the mobile crowd sourcing application (202) residing inside and running on respective mobile communication devices (204) of the first group of user and the subsequent group of user comprise of a media content selected from a group comprising of a text message, an image and a video pertaining to the plurality of plant disease attributes. The generated first set of task and subsequent set of task are distributed via the mobile crowd sourcing application (202) residing inside and running on the respective mobile communication devices (204) of the first group of user and the subsequent group of user are coupled with a voice prompt to read out the first set of task and subsequent set of task.

In another embodiment of the present invention, the task response collection module (306) is adapted for collecting response from the first group of user against distributed first set of task and the subsequent group of user against subsequent set of task.

In another embodiment of the present invention, the collected response of the first set of task pertaining to the plurality of plant disease attributes is aggregated for generating the subsequent set of task pertaining to the plurality of plant disease attributes for distributing to the subsequent group of user via the mobile crowd sourcing application (202) residing inside and running on their respective mobile communication devices (204), using the decision tree based task generation module (302) until plant disease is classified and classified plant disease based on the aggregated response of the subsequent set of task, using the plant disease classification module (308).

In another embodiment of the present invention, the collected and aggregated response of first set of task pertaining to the plurality of plant disease attributes from the first group of user and the subsequent set of task pertaining to the plurality of plant disease attributes from the subsequent group of user are stored in the task response database (210). The collected and aggregated data pertaining to response of first set of task pertaining to the plurality of plant disease attributes from the first group of user and the subsequent set of task pertaining to the plurality of plant disease attributes from the subsequent group of user are stored in the task response database (210), which is further validated by subject matter experts to generate multiple instances of number of diseases and causing pest.

In another embodiment of the present invention, the plant disease classification module (308) is adapted for classifying plant disease and determining severity of the classified plant disease based on the aggregated response of the subsequent set of task.

In another embodiment of the present invention, the determining severity of the classified plant disease based on the aggregated response of the subsequent set of task is used to provide advices to the first group of user and the subsequent set of user. The severity of the classified plant disease varies according to plant and respective corps, thereby actuating specific task to be generated and distributed to the first group of user and the subsequent set of user which is pertaining to crop, its growth stage and classified disease to determine severity.

In another embodiment of the present invention, the first group of user and the subsequent group of user are rewarded for providing response against the first set of task and the subsequent set of task respectively based on the type of the first set of task and the subsequent set of task, time required for providing response against the first set of task and the subsequent set of task, accuracy of response provided against the first set of task and the subsequent set of task, credits of the first group of user and the subsequent group of user.

In an exemplary embodiment of the present invention, a method for classifying plant disease in a geographical region using mobile communication device based crowd sourcing is provided.

The first set of task pertaining to the plurality of plant disease attributes is generated, using the decision tree based task generation module (302). The first set of task starts from the root question which is derived from the root node in a binary decision tree of the decision tree based task generation module (302).

The generated first set of task is distributed to a first group of user, which is K1 number of farmer via the mobile crowd sourcing application (202) residing inside and running on the global positioning system (GPS) enabled respective mobile communication device (204), using the task distribution module (304). The K1 number of farmers, essentially co-located in the geographical region of interest. The distributed first set of task, in turn trigger a question Q1 and display it on the mobile communication device (204) of K1 number of farmers. The question Q1 is displays to K1 number of farmers is "Is a canker lesion present on the stem?". The questions Q1 may be asked in native language for enabling the responses from a large number of farmers. The generated first set of task and corresponding question Q1 is distributed via the mobile crowd sourcing application (202) residing inside and running on the respective mobile communication devices (204) of the first group of user, which is K1 number of farmers are coupled with a voice prompt to read out the first set of task to accommodate reading illiterate farmers. The K1 number of farmers are provided with binary response options.

A set of binary responses R1 received from K1 number of farmers are collected, using the task response collection module (306). The collected set of binary responses R1 received from K1 number of farmers are aggregated. Considering the aggregated response R1 received is 0 against question Q1 distributed to K1 number of farmers.. The aggregated response R1 helps to navigate in the binary decision tree of the decision tree based task generation module (302), for generating a subsequent set of task, and corresponding question Q2 pertaining to the plurality of plant disease attributes based on the aggregated response of the first set of task and corresponding question Q1 for distributing to a subsequent group of user, which is K2 number of farmers via the mobile crowd sourcing application (202) residing inside and running on their respective mobile communication devices (204), using the decision tree based task generation module (302). Question Q2 is "Are spots present on leaf margin?". The question Q2 is distributed to the subsequent group of user, which is K2 number of farmers is the next question in the binary decision tree of the decision tree based task generation module (302). Considering the aggregated response received is R2 is 1 against question Q2 distributed to K2 number of farmers. R2 helps to navigate in the binary decision tree of the decision tree based task generation module (302), for generating a subsequent set of task, and corresponding question Q3 pertaining to the plurality of plant disease attributes based on the aggregated response of the subsequent set of task and corresponding question Q2 for distributing to a subsequent group of user, which is K3 number of farmers via the mobile crowd sourcing application (202) residing inside and running on their respective mobile communication devices (204), using the decision tree based task generation module (302). Question Q3 is "Are water soaked spots present on leaf margin?". Considering the aggregated response received is R3 is 1 against question Q3 distributed to K3 number of farmers, the disease is classified as "Bacterial pustule". However, if the aggregated response received is R3 is 0 against question Q3 distributed to K3 number of farmers; R3 helps to navigate in the binary decision tree of the decision tree based task generation module (302), for generating a subsequent set of task, and corresponding question Q4 pertaining to the plurality of plant disease attributes based on the aggregated response of the subsequent set of task and corresponding question Q3 for distributing to a subsequent group of user, which is K4 number of farmers via the mobile crowd sourcing application (202) residing inside and running on their respective mobile communication devices (204), using the decision tree based task generation module (302). Question Q4 is "Is seed size normal?". Likewise, the iterative process continues until a decision D about any disease has been arrived.

The preceding description has been presented with reference to various embodiments of the invention. Persons skilled in the art and technology to which this invention pertains will appreciate that alterations and changes in the described structures and methods of operation can be practiced without meaningfully departing from the principle, spirit and scope of this invention.

## Claims

1. A processor implemented method for classifying plant disease in a geographical region through crowdsourcing using mobile communication device; said method comprising:
a. actuating generation of a first set of task pertaining to a plurality of plant disease attributes, using a decision tree based task generation module (302);
b. distributing generated first set of task to a first group of user via a mobile crowd sourcing application (202) residing inside and running on a global positioning system (GPS) enabled respective mobile communication device (204), using a task distribution module (304);
c. collecting response from the first group of user against distributed first set of task, using a task response collection module (306);
d. aggregating the collected response for generating a subsequent set of task pertaining to the plurality of plant disease attributes based on the aggregated response of the first set of task for distributing to a subsequent group of user via the mobile crowd sourcing application (202), using the decision tree based task generation module (302);
e. collecting response from the subsequent group of user against distributed subsequent set of task, using the task response collection module (306); and aggregating the collected response of the subsequent set of task; and
f. classifying plant disease and determining severity of the classified plant disease based on the aggregated response of the subsequent set of task, using a plant disease classification module (308).

2. The method as claimed in claim 1, wherein the collected response of the first set of task pertaining to the plurality of plant disease attributes is aggregated for generating the subsequent set of task pertaining to the plurality of plant disease attributes for distributing to the subsequent group of user via the mobile crowd sourcing application (202), using the decision tree based task generation module (302) until plant disease is classified based on the aggregated response of the subsequent set of task, using the plant disease classification module (308).

3. The method as claimed in claim 1, wherein the first set of task and subsequent set of task distributed via the mobile crowd sourcing application (202) to the first group of user and the subsequent group of user comprise of a media content selected from a group comprising of a text message, an image and a video pertaining to the plurality of plant disease attributes.

4. The method as claimed in claim 1, wherein generation of the first set of task pertaining to the plurality of plant disease attributes is actuated by a plurality of conditions selected from a group comprising of crop type, weather conditions, soil properties, spatio-temporal variation of major and micro nutrients in the geographical region.

5. The method as claimed in claim 1, wherein the plurality of plant disease attributes are selected from a group comprising of symptoms of plant disease, nutrient deficiency, number of plants affected, number of plants damaged, severity of affected and damaged plants, mycellium, leaf spots and other visually perceivable disease specific plant symptoms.

6. The method as claimed in claim 1, the collected and aggregated response of first set of task pertaining to the plurality of plant disease attributes from the first group of user and the subsequent set of task pertaining to the plurality of plant disease attributes from the subsequent group of user are stored in a task response database (210).

7. The method as claimed in claim 1, wherein the first set of task and subsequent set of task pertaining to the plurality of plant disease attributes are selected from a pre-defined task database (208) comprising plurality of pre-defined task using the decision tree based task generation module (302).

8. The method as claimed in claim 1, wherein the subsequent group of user comprises one or more user out of the first set of users.

9. The method as claimed in claim 1, wherein the first group of users and subsequent group of user are co-located in the geographical region.

10. The method as claimed in claim 1, wherein the generated first set of task and subsequent set of task are distributed via the mobile crowd sourcing application (202) to the first group of user and the subsequent group of user are coupled with a voice prompt to read out the first set of task and subsequent set of task.

11. The method as claimed in claim 1, wherein the first group of user and the subsequent group of user are rewarded for providing response against the first set of task and the subsequent set of task respectively based on the type of the first set of task and the subsequent set of task, time required for providing response against the first set of task and the subsequent set of task, accuracy of response provided against the first set of task and the subsequent set of task, credits of the first group of user and the subsequent group of user.

12. A system (200) for classifying plant disease in a geographical region through crowdsourcing using mobile communication device; said system (200) comprising:
a. a mobile crowd sourcing application (202) residing inside and running on a global positioning system (GPS) enabled mobile communication device (204);
b. a server (206) comprising a processor and a memory coupled to the processor, communicatively coupled to the mobile crowd sourcing application (202); the server (206) further comprise of:
i. a decision tree based task generation module (302), adapted for actuating generation of a first set of task pertaining to a plurality of plant disease attributes and generating a subsequent set of task pertaining to the plurality of plant disease attributes based on the aggregated response of the first set of task;
ii. a task distribution module (304), adapted for distributing generated first set of task to a first group of user and the subsequent set of task to a subsequent group of user via the mobile crowd sourcing application (202);
iii. a task response collection module (306), adapted for collecting response from the first group of user against distributed first set of task and the subsequent group of user against subsequent set of task;
iv. a plant disease classification module (308), adapted for classifying plant disease and determining severity of the classified plant disease based on the aggregated response of the subsequent set of task; and
c. a task response database (210), communicatively coupled with the server (206) adapted for storing the collected and aggregated response of first set of task pertaining to the plurality of plant disease attributes from the first group of user and the subsequent set of task pertaining to the plurality of plant disease attributes from the subsequent group of user.

13. The system (200) as claimed in claim 12, further comprises of a pre-defined task database (208), adapted for storing a plurality of pre-defined task and enabling selection of the first set of task pertaining to the plurality of plant disease attributes using the decision tree based task generation module (302).

14. The system (200) as claimed in claim 12, the mobile communication device (204) is selected from a group comprising of mobile phone, laptop, tablet, and personal digital assistant.
